# EUROPÄISCHE PATENTSCHRIFT

(11) **EP 2 181 575 B1**
(45) Veröffentlichungstag und Bekanntmachung des Hinweises auf die Patenterteilung: **11.05.2016**
(21) Anmeldenummer: 09013259.8
(22) Anmeldetag: 21.10.2009
(51) Int. Cl.: A01D 17/06, A01D 33/02, B07B 1/15

(54) **Sternrad für Sternradwalzen von Förder- oder Trennvorrichtungen**
Star wheel for star wheel rollers on conveying or separating devices
Roue étoilée pour cylindres de roue étoilée de dispositifs de transport ou de séparation

(30) Priorität: 31.10.2008 DE 102008054239
(43) Veröffentlichungstag der Anmeldung: 05.05.2010
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Pott, Ulrich

(56) Entgegenhaltungen:
- EP-A- 0 635 313
- DE-A1- 4 340 101
- DE-A1- 19 749 485
- DE-U1- 9 307 096
- DE-U1- 29 803 880

## Beschreibung

Die Erfindung betrifft ein Sternrad für insbesondere Sternradwalzen von Förder- oder Trennvorrichtungen gemäß dem Oberbegriff des Anspruchs 1.

Sternräder für einen Einsatz in Sternradwalzen verschiedenster Vorrichtungen sind seit langem bekannt, wobei insbesondere eine Anwendung in landwirtschaftlichen Trennvorrichtungen vorgesehen ist. Gemäß der GB 2145612A sind Sternräder in Form von Metallscheiben auf einer Antriebswelle aufgereiht, wobei die jeweiligen Finger des Sternrades eine aus einer plattenförmigen Grundstruktur herausgearbeitete Kontur aufweisen. Bei einer Siebvorrichtung gemäß der DE 89 06 721 U1 sind jeweilige sichel- bzw. sternförmige Konturen aufweisende Finger an den als Förderglieder vorgesehenen Sterhrädern wirksam. In der GB 2234149A ist eine Sortiervorrichtung für Kartoffeln o. dgl. Erntegut gezeigt, bei der die Finger eines Sternrades mit denen eines benachbarten Sternrades zusammenwirken. Auch in der DE 43 40 101A wird eine Vorrichtung zur Trennung von Kartoffeln von Beimengungen vorgeschlagen, bei der ein Sternrad mit vergleichsweise wenigen, insbesondere elastisch verformbaren Fingern vorgesehen ist. Diese als Förderlippen wirkenden Finger sind mit einem Mantelteil verbunden, das seinerseits mit Stützspeichen so zu einer zentralen Nabe hin verläuft, dass eine Verformung der Speichen die Deformation der Mantelfläche aufnehmen kann. Bei den Sternradwalzen gemäß der DE 298 03 880 U1 sind aus Kunststoff geformte Sternräder vorgesehen, so dass deren im wesentlichen unveränderte Grundgeometrie aufweisende Finger durch variierende Materialdicke und Profilgebung mit jeweils unterschiedlichem Verformungs- und/oder Verlagerungsvermögen auf das Siebgut einwirken. Dabei bilden jeweilige Gruppen von Fingern härtere und weichere Zonen in Umfangsrichtung des Sternrades. In der DE 197 49 485 A1 ist ein Sternrad gezeigt, bei dem am Nabenteil zwei axial benachbarte Gruppen von Fingern vorgesehen sind, derart, dass diese Finger der ersten Gruppe zu den Fingern der zweiten Gruppe einen das Siebverhalten des Systems beeinflussenden Versatz aufweisen. Zur Erhöhung der Mitnahmewirkung dieses Systems sind an den im wesentlichen gleiche Grundgeometrie aufweisenden Fingern jeweilige wulstartige Verdickungen in Form von längsparallelen Querrippen vorgesehen, so dass derartige Sternräder bei der Herstellung einen nachteilig hohen Materialaufwand erfordern. In DE-U-93 07 096 ist ein Siebsterne aufweisendes Siebsystem gezeigt, wobei die Siebsterne mit axial vorspringenden Noppen versehen sind. Diese sind in hinterschnittenen Sacklöchern verrastet bzw. verklebt, so dass der jeweils überstehende Teilbereich der Noppen die Siebwirkung des Systems verändert. Ein ähnliches System mit einstückig geformten Noppen an Siebelementen ist in EP-A-0 635 313 gezeigt.

Die Erfindung befasst sich mit dem Problem, insbesondere für eine Sternradwalze vorgesehene Sternräder zu schaffen, die eine in Bezug auf Materialeinsatz sowie Zeitaufwand günstigere Herstellung ermöglichen und bei verringertem Gewicht im Vergleich mit bekannten Sternrädern verbesserte Elastizitäts- sowie Verschleißkennwerte aufweisen.

Die Erfindung löst diese Aufgabe durch ein Sternrad mit den Merkmalen des Anspruchs 1. Hinsichtlich wesentlicher weiterer Ausgestaltungen wird auf die Ansprüche 2 bis 9 verwiesen.

Ausgehend von bekannten Sternrädern mit radial vorspringenden Fingern werden mit dem erfindungsgemäßen Konzept Bauteile bereitgestellt, bei denen verbesserte Einsatzparameter für die als Verschleißbaugruppe in den Sortiervorrichtungen wirkenden Sternräder dadurch erreicht sind, dass deren Finger als unmittelbare Funktionsteile optimiert werden. Ausgehend von einer umfänglichen Analyse der Herstellungs- und Anwendungsparameter werden nunmehr Sternräder mit verbesserten Fingern realisiert, deren neuartige Formstruktur - bei Material sparender Herstellung - eine überraschende Verlängerung der Einsatzzeit von Sternrädern ermöglicht.

Die erfindungsgemäßen Sternräder aus Kunststoff werden bei der Herstellung insgesamt mit vergleichsweise geringerem Materialeinsatz geformt, beim Formgebungsprozess ist eine Verringerung von Fertigungszeiten - insbesondere auch bei variierenden Volumen- und Wanddickenbereichen an den strukturierten Fingern-möglich, und gleichzeitig können belastungsoptimale Material- und Geometriekennwerte so in die Formstruktur integriert werden, dass beim Einsatz der Sternräder höhere Verschleiß- und Antriebsfestigkeiten wirksam sind.

Die erfindungsgemäßen Sternräder bzw. deren Finger zeichnen sich dadurch aus, dass im Bereich deren Umfangskontur jeweilige als nut-, loch- und/oder taschenartigen Zonen ausgebildete Ausnehmungen geformt sind. Bei der Herstellung dieser Formstrukturen werden zur Verarbeitung von Kunststoffen an sich bekannte Formverfahren eingesetzt. Dabei können durch eine Reduzierung von in eine jeweilige Pressformvorrichtung o. dgl. Formwerkzeug einzubringendem Materialvolumen neben geringeren Materialkosten an "dünneren" Strukturen der einstückigen Sternräder auch systembedingte Abkühlungs- und Aushärtungszeiten beeinflusst werden, und damit sind jeweilige Zykluszeiten bei der Sternradherstellung insgesamt verkürzt.

Gleichzeitig werden mit der auf Grundlage einer FEM-Methode (Finite-Element-Methode) für variable Fingergrößen ermittelbaren Formstruktur die für das Verschleißverhalten der Sternräder maßgebenden Parameter betreffend die Härte- und Elastizitätseigenschaften optimiert. Dabei wird die Erkenntnis umgesetzt, dass an den "langgestreckten" Fingern deren für den praktischen Anwendungsfall wesentliches Kriterium betreffend die elastische Biegeverformung durch die nach Art eines "Fachwerkes" mit entsprechenden Steg- und Knotenbereichen wirkenden Formausnehmungen positiv veränderbar ist. Gleichzeitig kann auch das insbesondere im stirnseitigen Bereich der Finger maßgebliche Verschleißverhalten durch entsprechende Materialverstärkungen verändert und/oder der Abriebwiderstand erhöht werden, um damit eine maximale Standfestigkeit des gesamten Sternrades zu erreichen.

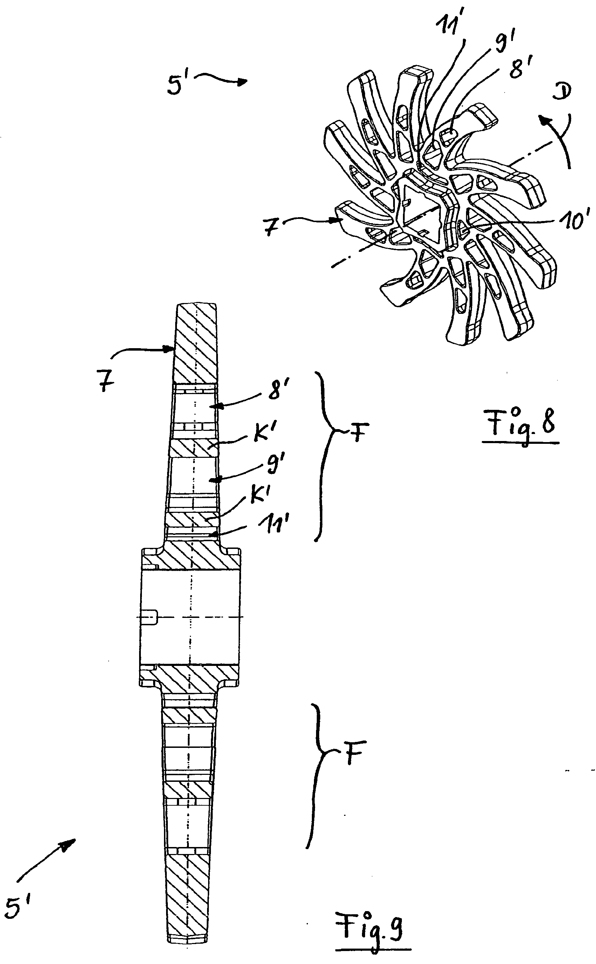

Weitere Einzelheiten und vorteilhafte Ausgestaltungen ergeben sich aus der nachfolgenden Beschreibung, in der der Gegenstand der Erfindung anhand mehrerer Ausführungsbeispiele und der Zeichnung 1 bis 7 sowie 14 näher veranschaulicht ist. Die Figuren 8 bis 13 betreffen Ausführungsformen, die nicht unter den beanspruchten Gegenstand fallen. In der Zeichnung zeigen:
- Fig. 1: eine Prinzipdarstellung einer mit Sternrädern versehenen Trenn- und Sortiervorrichtung in Seitenansicht,
- Fig. 2: eine Vorderansicht auf eine mehrere Sternräder aufweisende Sternradwalze,
- Fig. 3: eine Seitenansicht eines der in der Sternradwalze gemäß Fig. 2 vorgesehenen Sternräder,
- Fig. 4: eine Perspektivdarstellung des Sternrades gemäß Fig. 3,
- Fig. 5: eine Schnittdarstellung des Sternrades gemäß einer Linie V-V in Fig. 3,
- Fig. 6: eine Seitenansicht der Sternradwalze ähnlich Fig. 2 mit mehreren versetzt auf einem Nabenteil angeordneten Sternrädern,
- Fig. 7: eine Perspektivdarstellung der Sternradwalze gemäß Fig. 6,
- Fig. 8 und Fig. 9: eine zweite Ausführung des Sternrades ähnlich Fig. 4 und 5,
- Fig. 10: eine dritte Ausführung des Sternrades ähnlich Fig. 3,
- Fig. 11: eine vierte Ausführung des Sternrades ähnlich Fig. 10,
- Fig. 12 und Fig. 13: eine fünfte Ausführung des Sternrades ähnlich Fig. 11,
- Fig. 14: eine Ausschnittsdarstellung der Finger eines Sternrades bei einer Belastungsphase.

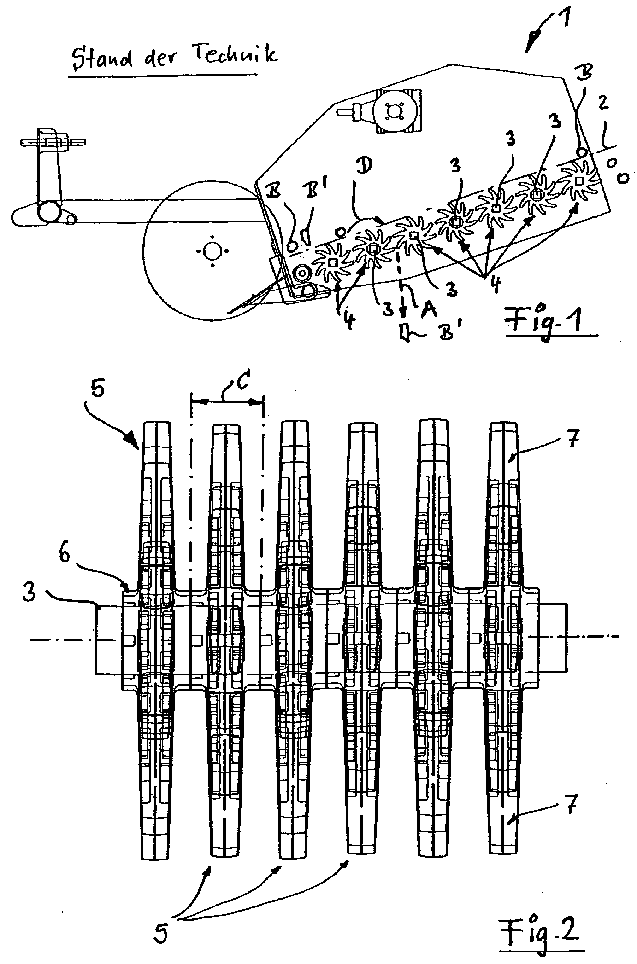

In Fig. 1 ist eine allgemein mit 1 bezeichnete Trenn- und Sortiervorrichtung, insbesondere ein von einem nicht dargestellten Zugfahrzeug bewegbares landwirtschaftliches Aggregat, dargestellt. In diesem Aggregat 1 sind mehrere auf einer jeweiligen Achse 3 befindliche Sternradwalzen 4 vorgesehen, mit denen eine insgesamt mit 2 bezeichnete Förderebene definiert ist. Bei Bewegung der Sternradwalzen 4 (Drehrichtung D) wird Sortiergut B, B' entlang der Förderebene 2 verlagert.

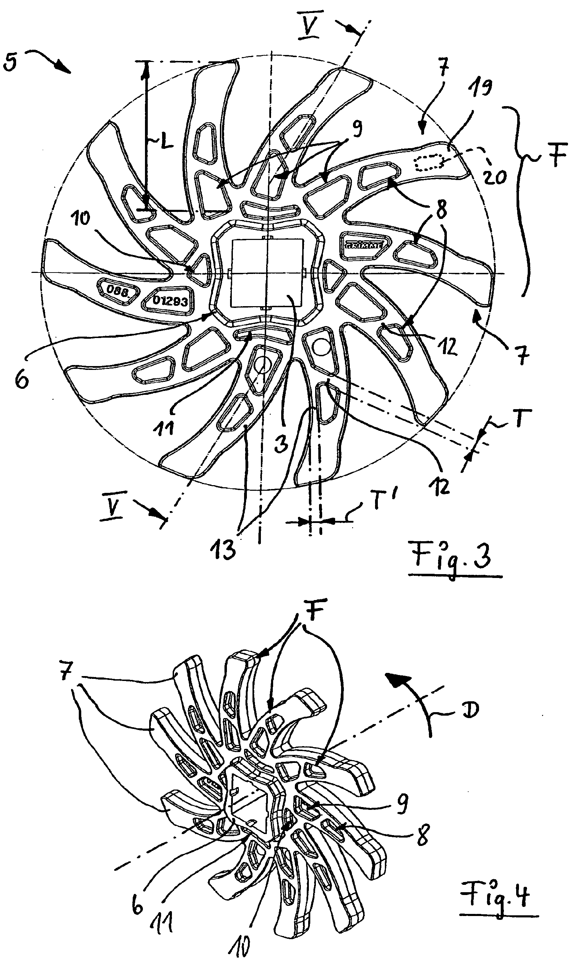

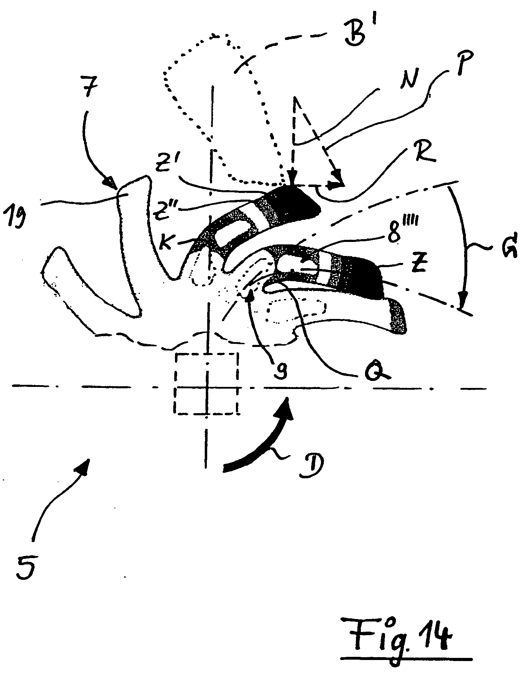

Derartige bekannte Sternradwalzen 4 (Fig. 2) sind mit mehreren, im wesentlichen aus Kunststoff bestehenden Sternrädern 5 (Fig. 3) versehen, die an einem die Einbaulage mit einer Breite C (Fig. 2) vorgebenden Nabenteil 6 eine Anzahl von sternförmig vorspringenden Fingern 7 aufweisen (DE 298 03 880 U1). In Zusammenschau mit der Drehrichtung D gemäß Fig. 1 ist ersichtlich, dass die Finger 7 beim Erfassen von Teilen des Sortiergutes B, B' jeweiligen Deformations- und Reibbelastungen ausgesetzt sind (Fig. 14), um beispielsweise Steine, Kluten o. dgl. Erdreichteile B' aus der Förderebene 2 auszufördern (Pfeil A, Fig. 1).

Die erfindungsgemäße Ausführung des Sternrades 5 (Fig. 3 bis 7 und Fig. 14) zeichnet sich dadurch aus, dass dieses mit einer bei der Herstellung einen vergleichsweise geringen Materialeinsatz erfordernden und zumindest im Bereich der Finger 7 gewichts- sowie belastungsoptimierbare Wirkparameter im Einsatzfall (Fig. 14) vorgebenden Formstruktur F (Fig. 3) versehen ist.

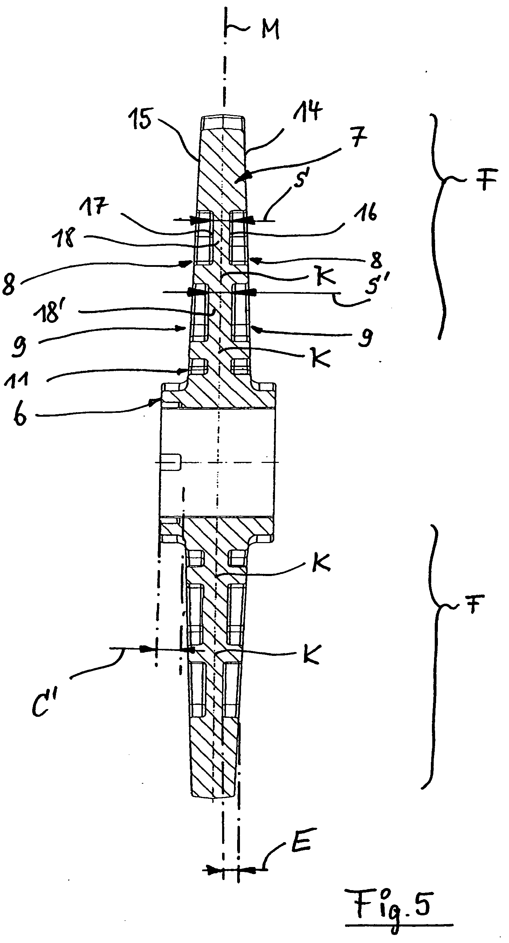

Bei dem in Fig. 3 bis 5 in eine erfindungsgemäßen Ausführung gezeigten Sternrad 5 wird deutlich, dass die Formstruktur F von jeweiligen an der Nabe 6 bzw. den Fingern 7 des Sternrades 5 vorgesehenen Ausnehmungen 8, 9 (in Längsrichtung der Finger) bzw. Ausnehmungen 10, 11 (im Nahbereich zur Nabe 6) gebildet ist. Die Zusammenschau von Fig. 4 und 5 verdeutlicht, dass die Ausnehmungen 8, 9, 10, 11 entsprechend dem späteren Einsatz der Sternradwalze 4 mit anwendungsspezifisch veränderbarer Formstruktur F formbar sind, wobei denkbar ist, dass die Finger 7 umfangsseitig auch mit nur einer - nicht dargestellten - Ausnehmung geformt werden.

Ebenso ist denkbar, dass die Material sparend geformten Ausnehmungen 8, 9, 10, 11 für spezifische Anwendungsfälle durch zusätzliche Abdeckteile (nicht dargestellt) wieder verschlossen werden oder während einer der Herstellungsphasen des Kunststoff-Sternrades 5 - z. B. nach einer Gießformung - eine Verfüllung erfolgt, derart, dass die Ausnehmungen mit einem preiswerteren Material verschlossen werden und/oder mit dem Füllmaterial eine gezielte Beeinflussung der Härte bzw. der Elastizität der Finger 7 erfolgt.

Der Test erster Prototypen des Systems mit erfindungsgemäßen Sternrädern 5 mit Ausnehmungen 8, 9, 10, 11 als Formstruktur hat gezeigt, dass bereits bei Verarbeitung von an sich bekannten Kunststoff-Komponenten bei der Herstellung dieser als Einzelteile bereitgestellten Sternräder 5 zumindest eine Volumen- bzw. Gewichtsreduzierung möglich ist, damit eine vorteilhafte Materialeinsparung erreicht wird und die beim Praxiseinsatz ermittelten Gebrauchseigenschaften zumindest gleichwertig zu bekannten Sternrädern sind. Auch eine Optimierung des Herstellungsprozesses kann durch den geringeren Materialeinsatz bewirkt werden, so dass die Fertigungszeiten vorteilhaft reduziert sind.

Das Konzept der Formstruktur F eröffnet die Möglichkeit vielfältiger Variationen, wobei im Bereich eines Sternrades 5 jeweilige Finger 7 mit Ausnehmung 8, 9, 10, 11 und jeweilige Finger ohne Ausnehmungen (nicht dargestellt) kombinierbar sind, so dass in Umfangsrichtung des Sternrades 5 eine entsprechende regelmäßige oder unregelmäßige Folge von Formstrukturen F wirksam ist. In zweckmäßiger Ausführung kann dabei in einer regelmäßigen Folge zwischen jeweiligen Fingern 7 mit Ausnehmung jeweils zumindest einer der Finger ohne Ausnehmung vorgesehen sein (nicht dargestellt).

Mit der bereits aus Fig. 3 ersichtlichen Lösung, bei der zumindest einer der Finger 7 mehrere Ausnehmungen 8, 9, 10 aufweist, wird die Optimierung dieser Bauteilkonfiguration in Zusammenschau mit Fig. 14 deutlich, da zumindest eine der Ausnehmungen 8, 9, 10 in einer das Biegeverhalten G (Fig. 14) bei aufliegendem Stückgut B' optimierenden Position am Umfang des Fingers 7 vorgesehen ist. Dabei wird in Zusammenschau von Fig. 3 bis 7 deutlich, dass die Ausnehmungen 8, 9, 10, 11 am jeweiligen Finger 7 eine volumenreduzierte Kernzone nach Art einer belastungsoptimalen Tragstruktur T, T' bilden, die mit jeweiligen Steg- bzw. Knotenbereiche K definierenden Zwischenwandteilen 12, 13 versehen sind.

Diese Tragstrukturen T, T' werden bereits dadurch gebildet, dass die Ausnehmungen 8, 9, 10, 11 mulden- bzw. rinnenförmig in das entsprechende Material "eingeformt" werden. In der Ausführung des Sternrades 5 gemäß Fig. 3 bis 7 sind die Ausnehmungen 8, 9, 10, 11 jeweils an gegenüberliegenden Seitenflächen 14,15 (Schnittdarstellung, Fig. 5) vorgesehen, wobei zwischen den gegenüberliegenden Bodenflächen 16, 17 der Ausnehmungen 8, 9, 10, 11 ein jeweiliger Steg 18, 18' gebildet ist.

Die dabei vorgesehenen muldenförmigen Ausnehmungen weisen eine Tiefe E auf, so dass entsprechende Breiten S, S' der zentralen Stege 18, 18' definiert werden, womit in dem Kunststoffmaterial im Bereich einer Längsmittelebene eine zentrale "Tragfaser" (mit Knotenbereichen K) so definiert ist, dass trotz dieses verringerten Volumens der Finger 7 deren Stabilität den Einsatzkriterien des Systems entspricht. Damit wird deutlich, dass die Ausnehmungen 8, 9, 10, 11 mit den Stegen 18, 18' in radialer Richtung jeweilige nach Art von Biegestäben zusammenwirkende Formzonen (Fig. 14) definieren, die nach Art eines "Fachwerkes" weitgehend variabel bemessen werden können.

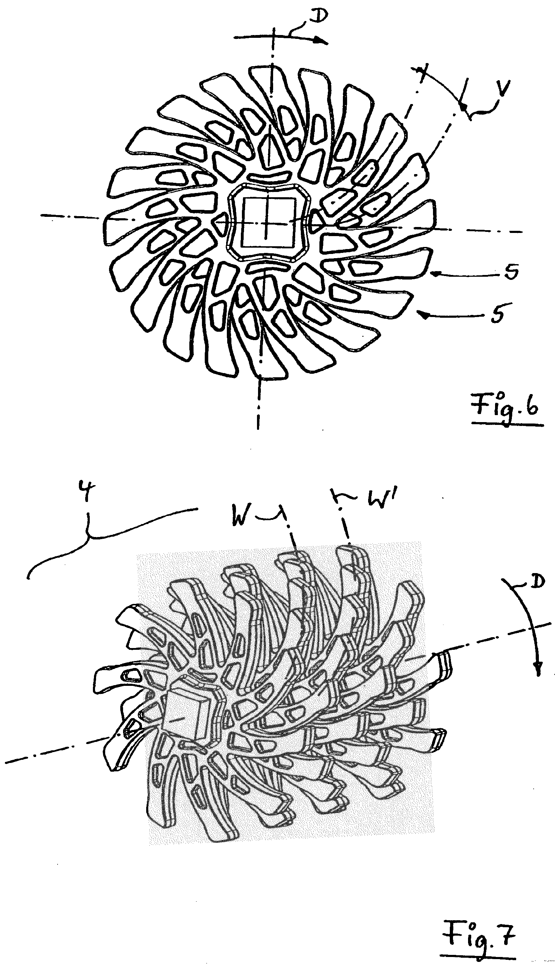

In Fig. 6 und Fig. 7 ist der Aufbau der Sternradwalze 4 aus mehreren der erfindungsgemäßen Sternräder 5 gezeigt, wobei diese auf der Achse 3 mit einem radialen Versatz V so aufgereiht sind, dass die aus Fig. 7 ersichtlichen "schraubenlinienförmigen" Wirklinien W, W' gebildet sind.

In Fig. 8 und 9 ist eine mögliche Ausführung des Sternrades 5' dargestellt, wobei dessen Finger 7, wie aus Fig. 9 ersichtlich, jeweilige Ausnehmungen 8', 9', 10', 11' aufweisen und diese als beidseitig offene Durchgangsöffnungen geformt sind. Die im Vergleich mit Fig. 5 identischen Konstruktionsmerkmale und Einzelheiten sind bei diesem Sternrad 5' (und auch den nachfolgenden Ausführungen) nicht nochmals mit Kurzzeichen versehen.

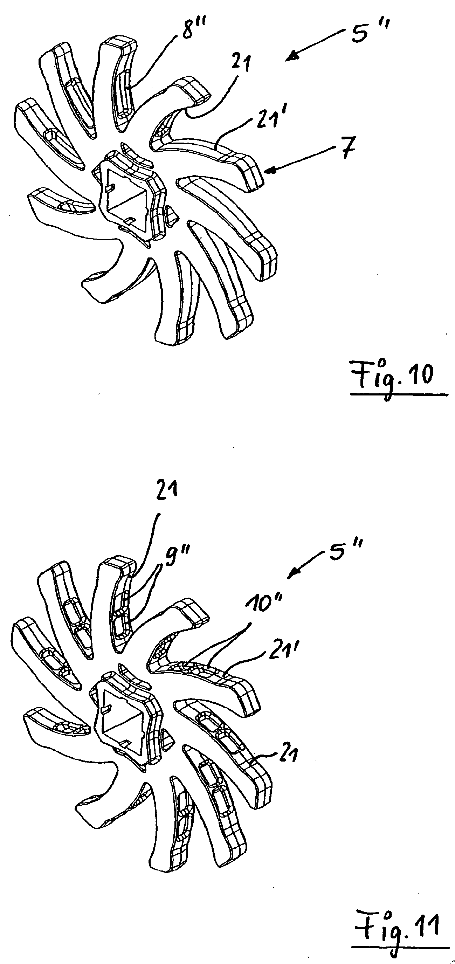

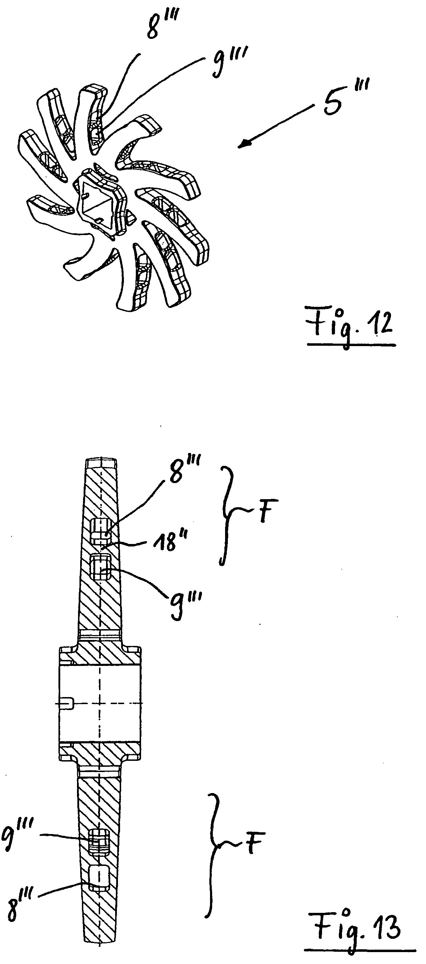

In der Ausführung des Sternrades 5" gemäß Fig. 10 und 11 sind an den zur Drehrichtung abgewandten Stirnseiten 21 bzw. der zugewandten Seite 21' der Finger 7 jeweilige Aufnahmeöffnungen 8", 9" und 10" als Formstruktur F vorgesehen und in Fig. 12 und 13 sind am Sternrad 5'" diese Formstrukturen F beispielhaft als jeweilige tangentiale Durchgangsöffnung geformte Ausnehmungen 8'" und 9'" vorgesehen.

Die vorgenannten Ausführungsformen der Sternräder 5, 5', 5" und 5'" verdeutlichen weitere Variationsmöglichkeiten des Systems der Formstruktur F, wobei auch radial und stirnseitig kombinierte Lagen der vorbeschriebenen Ausnehmungen denkbar sind (nicht dargestellt).

Die umfangreichen FEM-Untersuchungen an den vorbeschriebenen Ausführungsformen der Sternräder 5, 5', 5", 5'" haben gezeigt, dass mittels der in Fig. 14 beispielhaft anhand der Drehbewegung D und der im Auflagebereich des Sortiergutteils B' am Finger 7 wirkenden Vergleichsspannungen - dargestellt durch ein N-B-R-Kraftdreieck - entsprechend volumenreduzierte Ausführungen der Finger 7 optimiert werden können.

Dabei hat es sich gezeigt, dass trotz einer Minimierung des Materialvolumens die aus praktischen Anwendungen bekannten Steifigkeitseigenschaften der einzelnen Finger 7 wieder erreicht werden. Dies basiert auf einer Kombination der Formstruktur F mit einer bei Verarbeitung des Spritz-Kunststoffes erreichten höheren Schur-Härte am Endprodukt. Dabei ist eine variable konstruktive Ausführung möglich, da im Bereich der Finger 7 jeweilige weniger tragende Strukturen abgebildet werden und genau in diesen Bereichen entsprechende Ausnehmungen 8, 9, 10, 11 platzierbar sind. Daraus resultieren dann die vorbeschriebenen unterschiedlichen Ausführungen von Fingern 7 mit den zumindest zwei Ausnehmungen 8, 9, wobei insbesondere auch in Richtung einer Fingerspitze 19 eine weitere Ausnehmung 20 denkbar ist (Fig. 3). Da jedoch in diesem Spitzen-Bereich die Reibkomponente R (Fig. 14) besonders intensiv wirksam ist, ist in Abhängigkeit von der jeweiligen Länge L der Finger 7 ein entsprechender konstruktiver Kompromiss vorgesehen; die Ausnehmung 20 ist am Sternrad 5 nicht geformt.

Durch einen Vergleich unterschiedlicher Ausnehmungs-Varianten in den Formstrukturen F - auf Grundlage einer jeweils konstanten Druckkraft N bzw. P - konnte das System so optimiert werden, dass bei einer entsprechenden Biege- und Verschiebungsmöglichkeit gemäß der Biegekurve G am Sternrad 5 mittels der Ausnehmungs-Strukturen F eine Volumenreduzierung um 10 bis 30 %, vorzugsweise 20 %, realisiert werden kann. Festgestellt wurde dabei auch, dass der Elastizitäts-Modul bei den Sternrädern 5 mit Formstrukturen F so verändert ist, dass die maximalen Spannungswerte im Bereich Q der Finger 7 (Fig. 14) nur minimal verändert sind und damit die Langzeitstabilität der Finger 7 gewährleistet ist.

Um die in Fig. 14 mit dunkler Schraffur dargestellten Reibzonen Z, Z', Z" zu optimieren - insbesondere um im oberen Bereich 19 der Finger 7 ein größeres Volumen von Verschleißmaterial zur Verfügung zu stellen - kann die entsprechende Aussparung 8"" in Richtung zur Fingerspitze 19 hin variiert bzw. vergrößert werden, und auf die Ausnehmung 20 (Fig. 4) wird bei diesem Anwendungsfall verzichtet.

## Patentansprüche

1. Sternrad für Sternradwalzen (4) in Trenn- und Sortiervorrichtungen (1), insbesondere in landwirtschaftlichen Aggregaten, Bodenaufbereitungsanlagen o. dgl. Einrichtungen, wobei das im wesentlichen aus Kunststoff bestehende Sternrad (5) an einem Nabenteil (6) eine Anzahl von sternförmig vorspringenden Fingern (7) aufweist, die beim Erfassen von Teilen des Sortiergutes Deformations- und Reibbelastungen (R) aussetzbar sind, **dadurch gekennzeichnet, dass** an den zur Längsmittelebene (M) gegenüberliegenden Seitenflächen (14, 15) der Finger (7) jeweilige gegenüberliegende, eine Tiefe (E) aufweisende sowie loch-, nut-, mulden- und/oder taschenartig geformte Ausnehmungen (8, 9, 10, 11) vorgesehen sind und zwischen den Böden (16, 17) der Ausnehmungen (8, 9, 10, 11) ein Steg (18, 18') gebildet ist, derart, dass das Sternrad (5, 5', 5", 5'") in radialer Richtung jeweilige nach Art von Biegestäben zusammenwirkende Stegbereiche (K, K', 18,18') aufweist und im Bereich der Finger (7) mit einer eine volumenreduzierte Kernzone nach Art einer belastungsoptimalen Tragstruktur (T, T') bildenden Formstruktur (F) versehen ist.

2. Sternrad nach Anspruch 1, **dadurch gekennzeichnet, dass** die die Stegbereiche (K, K', 18, 18') bildenden Ausnehmungen (8, 9, 10, 11) in einer das Biegeverhalten (Pfeil G) bei aufliegendem Stückgut (B') optimierenden Position am Umfang des Fingers (7) vorgesehen sind.

3. Sternrad nach Anspruch 1 oder 2, **dadurch gekennzeichnet, dass** die Formstruktur (F) jeweilige an der Nabe (6) und den Fingern (7) des Sternrades (5, 5', 5", 5'") vorgesehene und die Stegbereiche (K, K', 18, 18') bildende Ausnehmungen (8, 9, 10, 11) aufweist.

4. Sternrad nach einem der Ansprüche 1 bis 3, **dadurch gekennzeichnet, dass** die Ausnehmungen (8, 9, 10, 11) eine entsprechend dem Einsatz der Sternradwalze (4) anwendungsspezifische veränderbare Formstruktur (F) bilden.

5. Sternrad nach einem der Ansprüche 1 bis 4, **dadurch gekennzeichnet, dass** dieses jeweilige Finger (7) mit Ausnehmung (8, 9, 10, 11) und Finger ohne Ausnehmung aufweist, derart, dass in Umfangsrichtung des Sternrades (5, 5', 5", 5'") eine regelmäßige oder unregelmäßige Folge der Formstrukturen (F) wirksam ist.

6. Sternrad nach Anspruch 5, **dadurch gekennzeichnet, dass** zwischen jeweiligen Fingern (7) mit Ausnehmung (8, 9, 10, 11) jeweils zumindest einer der Finger ohne Ausnehmung vorgesehen ist.

7. Sternrad nach einem der Ansprüche 1 bis 5, **dadurch gekennzeichnet, dass** sämtliche der Finger (7) mit mehreren Ausnehmungen (8, 9, 10, 11) versehen sind.

8. Sternrad nach einem der Ansprüche 1 bis 7, **dadurch gekennzeichnet, dass** in die bei der Formung des Sternrades (5, 5', 5", 5'") frei bleibenden Ausnehmungen (F) nachträglich ein bei der Anwendung des Sternrades erforderlicher Füllstoff, eine Abdeckung o. dgl. einbringbar ist.

9. Sternrad nach einem der Ansprüche 1 bis 8, **dadurch gekennzeichnet, dass** dieses zur Verwendung in einer Anlage zur Wertstofftrennung vorgesehen ist.

## Claims

1. Star wheel for star wheel rollers (4) in separating and sorting devices (1), in particular in agricultural units, soil preparation systems or similar apparatuses, the star wheel (5) which substantially consists of plastics material comprising a number of fingers (7) on a hub part (6) which project in the shape of a star and can be exposed to deformation loads and frictional loads (R) when parts of the material to be sorted are picked up, **characterised in that** respective recesses (8, 9, 10, 11) which lie opposite one another, have a depth (E) and are in the shape of holes, grooves, depressions and/or pockets are provided in the side faces (14, 15) of the fingers (7) opposite the longitudinal centre plane (M), and a web (18, 18') is formed between the bases (16, 17) of the recesses (8, 9, 10, 11) such that the star wheel (5, 5', 5", 5'") comprises respective web portions (K, K', 18, 18') in the radial direction which interact in the form of flexible rods and is provided with a moulded structure (F) in the region of the fingers (7) which forms a core zone of reduced volume in the form of a load-optimum support structure (T, T').

2. Star wheel according to claim 1, **characterised in that** the recesses (8, 9, 10, 11) which form the web regions (K, K', 18, 18') are provided in the periphery of the finger (7) in a position which optimises the flexural behaviour (arrow G) when a piece of material (B') is resting thereagainst.

3. Star wheel according to either claim 1 or claim 2, **characterised in that** the moulded structure (F) comprises respective recesses (8, 9, 10, 11) which are provided in the hub (6) and the fingers (7) of the star wheel (5, 5', 5", 5'") and form the web portions (K, K', 18, 18').

4. Star wheel according to any of claims 1 to 3, **characterised in that** the recesses (8, 9, 10, 11) form an adjustable moulded structure (F) that is specific to the use of the star wheel roller (4).

5. Star wheel according to any of claims 1 to 4, **characterised in that** said star wheel comprises respective fingers (7) having a recess (8, 9, 10, 11) and fingers not having a recess such that a uniform or non-uniform sequence of the moulded structures (F) is formed in the circumferential direction of the star wheel (5, 5', 5", 5'").

6. Star wheel according to claim 5, **characterised in that** at least one of the fingers not having a recess is provided between respective fingers (7) having a recess (8, 9, 10, 11) in each case.

7. Star wheel according to any of claims 1 to 5, **characterised in that** all of the fingers (7) are provided with a plurality of recesses (8, 9, 10, 11).

8. Star wheel according to any of claims 1 to 7, **characterised in that** a filler, a cover or the like which is required during use of the star wheel can be subsequently inserted into the recesses (F) which remain free when moulding the star wheel (5, 5', 5", 5"').

9. Star wheel according to any of claims 1 to 8, **characterised in that** said star wheel is provided for use in a plant for separating recyclable materials.

## Revendications

1. Roue étoile pour rouleaux étoile (4) sur des dispositifs de séparation et de triage (1), notamment dans des unités agricoles, des installations de préparation du sol ou des équipements similaires, dans laquelle la roue étoile (5) composée substantiellement de matière plastique présente au niveau d'une pièce formant moyeu (6) un certain nombre de branches (7) saillant en forme d'étoile, susceptibles d'être soumises à des charges de déformation et de friction (R) lorsque des parties des produits à trier sont saisies, **caractérisée en ce que** sur les surfaces latérales (14, 15) des branches (7), opposées par rapport au plan médian longitudinal (M), sont prévus des évidements (8, 9, 10, 11) opposés respectifs qui présentent une profondeur (E) et sont réalisés sous forme de trous, de rainures, de cavités et/ou de poches, **en ce qu'**une entretoise (18, 18') est formée entre les fonds (16, 17) des évidements (8, 9, 10, 11) de telle sorte que la roue étoile (5, 5', 5", 5'") présente dans le sens radial des zones d'entretoise (K, K', 18, 18') respectives coopérant à la manière de barres soumises à la flexion et est munie au niveau des branches (7) d'une zone centrale de volume réduit à la manière d'une structure profilée (F) formant une structure de support (T, T') optimisée en sollicitation.

2. Roue étoile selon la revendication 1, **caractérisée en ce que** les évidements (8, 9, 10, 11) formant les zones d'entretoise (K, K', 18, 18') sont prévus dans une position sur la circonférence de la branche (7) qui optimise le comportement en flexion (flèche G) lorsque la charge isolée (B') est en place.

3. Roue étoile selon la revendication 1 ou 2, **caractérisée en ce que** la structure profilée (F) présente des évidements (8, 9, 10, 11) respectifs, prévus au niveau du moyeu (6) et des branches (7) de la roue étoile (5, 5', 5", 5'") et formant les zones d'entretoise (K, K', 18, 18').

4. Roue étoile selon l'une quelconque des revendications 1 à 3, **caractérisée en ce que** les évidements (8, 9, 10, 11) forment une structure profilée (F) variable, spécifique à l'application selon l'utilisation du rouleau étoile (4).

5. Roue étoile selon l'une quelconque des revendications 1 à 4, **caractérisée en ce qu'**elle présente des branches (7) respectives avec évidement (8, 9, 10, 11) et des branches sans évidement de telle sorte qu'une suite régulière ou irrégulière des structures profilées (F) agit dans le sens circonférentiel de la roue étoile (5, 5', 5", 5'").

6. Roue étoile selon la revendication 5, **caractérisée en ce qu'**au moins l'une des branches sans évidement est prévue entre des branches (7) respectives avec évidement (8, 9, 10, 11).

7. Roue étoile selon l'une quelconque des revendications 1 à 5, **caractérisée en ce que** la totalité des branches (7) est munie de plusieurs évidements (8, 9, 10, 11).

8. Roue étoile selon l'une quelconque des revendications 1 à 7, **caractérisée en ce qu'**une matière de remplissage, un recouvrement ou similaires, nécessaire à l'utilisation de la roue étoile, peut être introduit(e) a posteriori dans les évidements (F) restant libres lors de la réalisation de la roue étoile (5, 5', 5", 5'").

9. Roue étoile selon l'une quelconque des revendications 1 à 8, **caractérisée en ce qu'**elle est prévue pour une utilisation dans une installation destinée au tri des matières recyclables.
